# EUROPÄISCHE PATENTANMELDUNG

(11) **EP 2 338 730 A1**
(43) Veröffentlichungstag der Anmeldung: **29.06.2011**
(21) Anmeldenummer: 10015058.0
(22) Anmeldetag: 27.11.2010
(51) Int. Cl.: B60Q 1/14, H01H 3/50

(54) **Anordnung zur Erzeugung einer Haptik bei einem Bedienelement**

(30) Priorität: 17.12.2009 DE 102009058593
(71) Anmelder: Valeo Schalter und Sensoren GmbH, 74321 Bietigheim-Bissingen (DE)
(72) Erfinder: Ullmann, Tim, 74376 Gemmrigheim (DE); Bosch, Jürgen, 86757 Wallerstein (DE)

(57) **Zusammenfassung**

Es wird eine Anordnung zur Erzeugung einer Haptik bei einem Bedienelement vorgeschlagen, das aus einem in einer Aussparung axial geführten Stößel (1) besteht, wobei am Stößel axial schräg angebrachte flexible Rippen (3) vorhanden sind, die mit dem Stößel (1) in ihrer Ausgangslage eine äußere Weite aufweisen, die einen vorgegebenen Betrag größer ist als die innere Weite der Aussparung.

## Beschreibung

Die Erfindung betrifft eine Anordnung zur Erzeugung einer Haptik bei einem Bedienelement, beispielsweise bei Schalt- oder Tastelementen in Kraftfahrzeugen im Bedienbereich des Fahrers, die durch Druck, Zug oder sonstige mechanische Beeinflussung einen elektrischen oder mechanischen Vorgang auslösen können, nach der Gattung des Hauptanspruchs.

Es ist beispielsweise aus der EP 0255418 B1 bekannt, dass ein Stößel als Bestandteil des Bedienelements in einer Aufnahmebohrung axial bewegbar ist. Zur Erzeugung einer Haptik wird dieser Stößel aus der Bohrung elastisch gegen eine Nockenvorrichtung mit einem Vorsprung gedrückt.

Aus der EP 1433189 B1 ist auch bekannt, dass in der Längserstreckung eines solchen Stößels als Rastbolzen biegeweiche Führungsrippen angeordnet sind, durch die der Rastbolzen in einem Gehäuse geführt ist.

Hierbei stellen insbesondere der Spielausgleich und die Selbstzentrierung des Stößels bei der axialen Bewegung des Stößels ein Problem dar.

### Darstellung der Erfindung

Es kann daher als eine Aufgabe der Erfindung angesehen werden, eine Anordnung zur Erzeugung der Haptik so weiterzubilden, dass ein optimaler Spielausgleich mit standardiesierten Elementen erreichbar ist.

Die Erfindung geht von einer Anordnung zur Erzeugung einer Haptik bei einem Bedienelement aus, das aus einem in einer Aussparung axial geführten Stößel besteht. Erfindungsgemäß sind dazu in vorteilhafter Weise am Stößel axial schräg angebrachte flexible Rippen vorhanden, die mit dem Stößel in ihrer Ausgangslage eine äußere Weite aufweisen, die um einen vorgegebenen Betrag größer ist als die innere Weite der Aussparung.

Die Rippen sind vorzugsweise axialsymmetrisch am Stößel angebracht und jeweils einzeln in der Bewegungsrichtung zur Erzeugung der Haptik in einem vorgegebenen Winkel aus der Achse der Bewegungsrichtung herausgeführt, sodass der äußere Umfang aller Rippen am Ende der somit schräg angebrachten Rippen in der Bewegungsrichtung durch die größere Weite als die Aussparung einen Reibungsdruck auf die Innenwand der Aussparung ausübt.

Vorteilhaft ist es hierbei, wenn die Aussparung eine zylindrische Aufnahmebohrung ist, der Stößel im Kern einen geringeren Durchmesser als die Aufnahmebohrung aufweist.

Bevorzugt ist das Bedienelement ein Schalt- oder Tastelement in Kraftfahrzeugen im Bedienbereich des Fahrers angeordnet, das durch Druck, Zug oder sonstige mechanische Beeinflussung einen elektrischen oder mechanischen Vorgang auslösen kann.

### Kurze Beschreibung der Zeichnung

Ein Ausführungsbeispiel der Erfindung wird anhand der Figur der Zeichnung erläutert. Es zeigt:

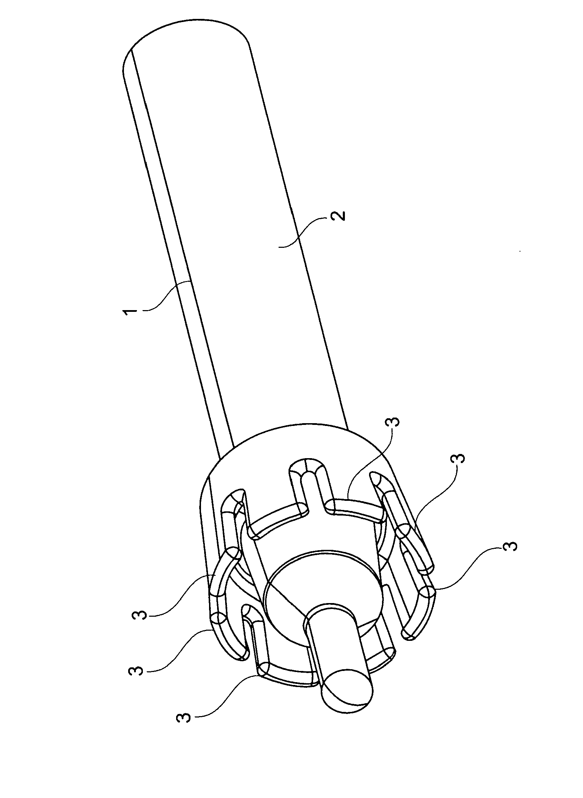

Figur 1 eine Darstellung eines Stößels als Bedienelement mit optimierter Haptik durch flexible, aufgeweitete Rippen.

### Weg zur Ausführung der Erfindung

Aus Figur 1 ist schematisch ein Stößel 1 gezeigt, der in einer hier nicht dargestellten Aussparung, zum Beispiel eine Aufnahmebohrung eines Bedienelements geführt wird, um beispielsweise Schalt- oder Tastfunktionen auszuführen. Solche Schalt- oder Tastfunktionen werden beispielsweise bei einem Lenkstockschaltermodul in einem Kraftfahrzeug oder allgemein bei einem sogenannten Joystick bzw. bei Lüfterschaltern benötigt. Der Kern 2 des Stößels 1 weist hierbei einen geringeren Durchmesser als die Aufnahmebohrung auf und im unteren Bereich des Stößels 1 sind radial aufgeweitete Rippen 3 vorhanden, die an der größten Stelle der Aufweitung einen größeren Durchmesser des Stößels 1 ausbilden bilden als die Aufnahmebohrung.

Mit dieser oft auch nur geringfügigen flexiblen Durchmessererweiterung wird ein mechanischer Widerstand in der Bewegung des Stößels 1 generiert, mit dem eine optimale Haptik des damit gebildeten Bedienelements eingestellt werden kann.

## Patentansprüche

1. Anordnung zur Erzeugung einer Haptik bei einem Bedienelement, das aus einem in einer Aussparung axial geführten Stößel (1) besteht, **dadurch gekennzeichnet, dass** am Stößel (1) axial schräg angebrachte flexible Rippen (3) vorhanden sind, die mit dem Stößel (1) in ihrer Ausgangslage vor dem Einführen in die Aussparung eine äußere Weite aufweisen, die einen vorgegebenen Betrag größer ist als die innere Weite der Aussparung.

2. Anordnung nach Anspruch 1 oder 2, **dadurch gekennzeichnet, dass** die Rippen (3) axialsymmetrisch am Stößel (1) angebracht sind und jeweils einzeln in der Bewegungsrichtung zur Erzeugung der Haptik in einem vorgegebenen Winkel aus der Achse der Bewegungsrichtung herausgeführt sind, sodass der äußere Umfang aller Rippen am Ende der somit schräg angebrachten Rippen in der Bewegungsrichtung durch die größere Weite als die Aussparung einen Reibungsdruck auf die Innenwand der Aussparung ausübt.

3. Anordnung nach Anspruch 1 oder 2, **dadurch gekennzeichnet, dass** die Aussparung eine zylindrische Aufnahmebohrung ist und der Stößel (1) im Kern einen geringeren Durchmesser als die Aufnahmebohrung aufweist.

4. Anordnung nach Anspruch 1, 2 oder 3, **dadurch gekennzeichnet, dass** das Bedienelement ein Schalt- oder Tastelement in Kraftfahrzeugen im Bedienbereich des Fahrers ist, das durch Druck, Zug oder sonstige mechanische Beeinflussung einen elektrischen oder mechanischen Vorgang auslöst.
